# EUROPÄISCHE PATENTSCHRIFT

(11) **EP 4 157 578 B1**
(45) Veröffentlichungstag und Bekanntmachung des Hinweises auf die Patenterteilung: **01.01.2025**
(21) Anmeldenummer: 21730517.6
(22) Anmeldetag: 28.05.2021
(51) Int. Cl.: B23K 26/064, B23K 26/066, B23K 26/08, B23K 26/38, B23K 37/02, B23K 37/04

(54) **LASERSCHNEIDVERFAHREN UND LASERSCHNEIDANLAGE**
LASER CUTTING METHOD AND LASER CUTTING SYSTEM
PROCÉDÉ DE DÉCOUPE LASER ET INSTALLATION DE DÉCOUPE LASER

(30) Priorität: 28.05.2020 DE 102020206670
(43) Veröffentlichungstag der Anmeldung: 05.04.2023
(73) Patentinhaber: TRUMPF Werkzeugmaschinen SE + Co. KG, 71254 Ditzingen (DE)
(72) Erfinder: KAISER, Tobias, 71277 Rutesheim (DE)
(74) Vertreter: Trumpf Patentabteilung
(86) Internationale Anmeldenummer: PCT/EP2021/064357
(87) Internationale Veröffentlichungsnummer: WO 2021/239953

(56) Entgegenhaltungen:
- WO-A1-2012/147200
- WO-A1-2020/050335
- DE-A1- 102007 059 987
- DE-A1- 102011 116 833
- US-A1- 2019 061 056

## Beschreibung

### Hintergrund der Erfindung

Die Erfindung betrifft ein Verfahren zum Laserschneiden eines Werkstücks, wobei ein Laserstrahl in einer Schnittrichtung über das Werkstück geführt wird, sodass ein Schnittspalt mit zwei Schnittflanken entsteht, wobei an dem Werkstück an einer sich zwischen den Schnittflanken erstreckenden Schneidfront Material aufgeschmolzen wird. Die Erfindung betrifft ferner eine Laserschneidanlage aufweisend eine Laserlichtquelle und einen Bearbeitungskopf, um einen Laserstrahl in einer Schnittrichtung über ein Werkstück zu führen.

Beim Laserschneiden wird typischerweise Material eines Werkstücks an einer Schneidfront durch einen Laserstrahl aufgeschmolzen. Das aufgeschmolzene Material wird sodann ausgetrieben, d. h. von dem Werkstück entfernt, sodass ein Schnittspalt entsteht.

Beim Schneiden mit Festkörperlasern erfolgt der Austrieb der Schmelze oft weit im Nachlauf, d. h. in einem gewissen Abstand hinter der Schneidfront, und der Austrieb ist häufig pulsierend. Da der Laserstrahl die Schmelze im Nachlauf nicht mehr aufheizt bzw. deren Temperatur aufrechterhält, sinkt die Temperatur der auszutreibenden Schmelze mit zunehmender Entfernung von der Schneidfront. Dadurch steigt die Viskosität der Schmelze an, und beim Ablösen der Schmelze von einer Unterkante des Werkstücks bleiben Teile der Schmelze an der Unterseite des Werkstücks haften. Dies führt zu einer Gratbildung. Ferner kann Schmelze an den Schnittflanken des Schnittspalts haften bleiben und dort erstarren, wodurch die Rauheit der Schnittflanken erhöht wird.

Aus DE 10 2007 059 987 B4 oder WO 2008 052 547 A1 ist es bekannt, zur Verbesserung der Schnittkantenqualität beim Laserschneiden mit zwei oder mehr Laserstrahlen zu schneiden, wobei ein vorlaufender Laserstrahl das Material des Werkstücks an einer Schneidfront aufschmilzt und den eigentlichen Schneidprozess durchführt und wobei der bzw. die nachlaufenden Laserstrahlen zur (Wieder-)Erwärmung des Schmelzbads und zur Verbesserung des Austriebs der Schmelze dienen. Gemäß WO 2008 052 547 A1 können die nachlaufenden Laserstrahlen zudem Schnittkanten nachschneiden.

Ferner sind beispielsweise aus der WO 2012/147200 A1 (offenbarend den Oberbegriff der Ansprüche 1 und 10), der DE 10 2011 116833 A1 und der WO 2020/050335 A1 Techniken zur statischen und/oder dynamischen Strahlformung von Laserstrahlen für Laserbearbeitungsverfahren bekannt.

### Aufgabe der Erfindung

Es ist Aufgabe der Erfindung, die Schnittqualität beim Laserschneiden zu verbessern, insbesondere eine Gratbildung an Schnittkanten zu verringern.

### Beschreibung der Erfindung

Diese Aufgabe wird erfindungsgemäß gelöst durch ein Laserschneidverfahren gemäß Anspruch 1 und eine Laserschneidanlage mit den in Anspruch 10 angegebenen Merkmale. In den jeweiligen Unteransprüchen und der Beschreibung sind vorteilhafte Varianten bzw. Ausführungsformen beschrieben.

### Erfindungsgemäßes Laserschneidverfahren

Erfindungsgemäß ist ein Verfahren zum Laserschneiden eines Werkstücks entsprechend Anspruch 1 vorgesehen. Das Werkstück besteht typischerweise aus einem metallischen und/oder elektrisch leitfähigen Material. Das Werkstück kann blechförmig sein. Zum Schneiden des Werkstücks wird ein Laserstrahl in einer Schnittrichtung über das Werkstück geführt, sodass ein Schnittspalt mit zwei Schnittflanken entsteht. Dabei wird an dem Werkstück an einer sich zwischen den Schnittflanken erstreckenden Schneidfront Material aufgeschmolzen. Ein Teil des aufgeschmolzenen Materials kann verdampft werden. Die Schnittflanken begrenzen den Schnittspalt quer zur Schnittrichtung. Die Schneidfront bezeichnet die Phasengrenze zwischen flüssigem und festem Material des Werkstücks. Der Laserstrahl kann eine Wellenlänge von wenigstens 0,2 µm, vorzugsweise wenigstens 0,4 µm besitzen. Der Laserstrahl kann eine Wellenlänge von höchstens 6 µm, vorzugsweise höchstens 4 µm besitzen. Der Laserstrahl kann von einem Festkörperlaser erzeugt werden.

Erfindungsgemäß ist vorgesehen, dass die Schneidfront nicht tangential, sondern unter einem Winkel an zumindest eine der Schnittflanken, vorzugsweise an beide Schnittflanken, angrenzt. Der Winkel an der Grenze zwischen der Schnittflanke und der Schneidfront ist entsprechend der Erfindung größer als Null. Mit anderen Worten ist ein Übergang zwischen der Schneidfront und der Schnittflanke nicht glatt. Der abgewinkelte Übergang der Schneidfront auf die Schnittflanke kann auch als ein unstetiger Übergang bezeichnet werden. Insbesondere ist am Übergang zwischen der Schneidfront und der Schnittflanke eine Tangentialebene an die Schneidfront gegenüber einer Tangentialebene an die Schnittflanke um den Winkel geneigt. Ein tangentialer Übergang (d. h. ein Übergang mit einem verschwindenden Winkel, wie es aus dem Stand der Technik bekannt ist) wird bei der vorliegenden Erfindung nicht als ein Angrenzen unter einem Winkel verstanden.

Weiter erfindungsgemäß weist der Laserstrahl einen nicht-kreisförmigen Querschnitt auf. In Schnittrichtung vorne weist der Laserstrahl eine durchgängige, zu der Schneidfront korrespondierende Schneidstrahlkontur auf. Mit anderen Worten entspricht die Form der Schneidstrahlkontur der Form der Schneidfront.

Die Schneidstrahlkontur des Laserstrahls kann dabei insbesondere quer zur Schnittrichtung kleiner als die Schneidfront sein. Durch die Gestaltung der Schneidstrahlkontur wird die Schneidfront in der beschriebenen Weise ausgebildet.

Für die Beschreibung der Schneidfront und der Schneidstrahlkontur wird jeweils auf die aktuelle Schnittrichtung Bezug genommen. Die Beschreibung der Form des Laserstrahls bezieht sich insbesondere auf einen mit dem Werkstück in Eingriff befindlichen oder für einen Eingriff mit dem Werkstück vorgesehenen Querschnitt des Laserstrahls.

Durch den Winkel an der Grenze zwischen der Schneidfront und der Schneidflanke bzw. den Schneidflanken wird dem Abfließen der Schmelze auf die Schneidflanke(n) ein Widerstand entgegengesetzt, der das Abströmen der Schmelze auf die Schneidflanke(n) verhindert oder zumindest reduziert. Erfindungsgemäß wurde erkannt, dass beim Austrieb der Schmelze direkt an einem Scheitel der Schneidfront eine Gratbildung an der Schneidflanke vermieden werden kann. Selbst wenn nahe am Schneidfrontscheitel zunächst ein Grat entstehen sollte, beispielsweise bei einem inhomogenen Austrieb der Schmelze, so wird dieser Grat beim Fortschreiten der Schneidfront überschnitten und ist somit am fertig geschnittenen Bauteil nicht mehr vorhanden. Mit dem erfindungsgemäßen Laserschneidverfahren kann daher eine gute Qualität der Schnittflanken erhalten werden. Dies kann zudem die Entnehmbarkeit von ausgeschnittenen Teilen des Werkstücks verbessern, da die Gefahr des Verhakens von Werkstückabschnitten diesseits und jenseits des Schnittspalts aneinander verringert ist.

Demgegenüber wird bei aus dem Stand der Technik bekannten Laserschneidverfahren üblicherweise mit einem rotationssymmetrischen (typischerweise runden) Laserstrahl geschnitten. Damit ergibt sich eine Schneidfront, die sowohl an der Blechoberseite als auch an der Blechunterseite eine halbkreisförmige Form aufweist. Durch Verdampfungseffekte und eine turbulente Schmelzeströmung, insbesondere beim Einsatz eines Festkörperlasers, kann eine Strömung der Schmelze einen zunehmend waagrechten Geschwindigkeitsvektor (d. h. mit einer zunehmenden bzw. überwiegenden Komponente in der Blechebene) aufweisen. Die Schmelze fließt somit lateral um den Laserstrahl herum auf die Schnittflanken. Die im Stand der Technik halbkreisförmige Schneidfrontform begünstigt das Abfließen der Schmelze auf die bereits geschnittenen Flanken, da diese Schnittflanken tangential an die Halbkreisform der Schneidfront anschließen. Dieses Überströmen der Schmelze auf die bereits geschnittenen Schnittflanken verursacht eine Gratbildung und erhöht darüber hinaus die Oberflächenrauheit der Schnittflanken. Dies verringert zudem die Entnehmbarkeit der geschnittenen Teile aus dem Restgitter, da sogenannte überlagerte Riefen an den Schnittflanken entstehen können.

Das erfindungsgemäße Laserschneidverfahren wird vorzugsweise mit einer unten beschriebenen, erfindungsgemäßen Laserschneidanlage durchgeführt. In Zusammenhang mit der Laserschneidanlage beschriebene Merkmale des Laserschneidverfahrens können bei dem erfindungsgemäßen Laserschneidverfahren vorgesehen sein.

Um den Austrieb der Schmelze aus dem Schnittspalt zu unterstützen, kann Schneidgas in einem Gasstrahl auf das Werkstück gerichtet werden.

Ein Abstand eines Schneidfrontscheitels von dem Übergang der Schneidfront zur Schnittflanke kann wenigstens halb so groß sein wie eine Schnittspaltbreite und/oder höchstens so groß sein wie die Schnittspaltbreite. Der Austrieb der Schmelze erfolgt möglichst nahe an dem Schneidfrontscheitel. Der Schneidfrontscheitel bezeichnet den in Schnittrichtung am weitesten vorne bzw. am weitesten hinten liegenden und in einem Abstand von den Übergängen zu den Schnittflanken angeordneten Grenzen der Schnittfront. Der Schneidfrontscheitel liegt typischerweise mittig zwischen den Schnittflanken. Der Abstand wird in Schnittrichtung gemessen. Durch eine entsprechend geformte Schneidstrahlkontur kann auch mehr als ein Scheitel auf der Schneidfront gebildet werden. Die Schneidfront hat dann z.B. einen W-förmigen Verlauf. Die Schnittspaltbreite wird senkrecht zur Schnittrichtung und typischerweise senkrecht zu den Schnittflanken zwischen den Schnittflanken gemessen.

Der Winkel zwischen der Schneidfront und der Schnittflanke kann wenigstens 30°, bevorzugt wenigstens 60°, besonders bevorzugt wenigstens 90°, ganz besonders bevorzugt wenigstens 120°, betragen. Mit einem derart bemessenen Winkel kann ein Überströmen von Schmelze auf die Schnittflanken besonders wirkungsvoll vermieden werden. Insbesondere kann die Schmelze umso effektiver daran gehindert werden, auf die Schnittflanke abzuströmen, je größer der Winkel zwischen der Schneidfront und der Schnittflanke ist.

Vorteilhafterweise ist innerhalb der Schneidfront wenigstens eine Knickstelle ausgebildet, an der benachbarte Abschnitte der Schneidfront gegeneinander abgewinkelt sind. Die wenigstens eine Knickstelle verringert eine zu den Schnittflanken gerichtete Strömung der Schmelze weiter. Die Knickstelle erstreckt sich in Dickenrichtung typischerweise durch das Werkstück hindurch. Die Schneidstrahlkontur des Laserstrahls weist eine oder mehrere korrespondierende Knickstelle(n) auf.

Die Schneidstrahlkontur kann durch Hin- und Herbewegen (Scannen) des Laserstrahls erzeugt werden. Mit anderen Worten kann eine von dem Laserstrahl bestrahlte Gesamtfläche, welche in Schnittrichtung vorne durch die Schneidstrahlkontur begrenzt ist, erzeugt werden, indem ein (im Verhältnis zu Gesamtfläche) kleiner Laserstrahl schnell über diese Gesamtfläche bewegt wird.

Alternativ oder zusätzlich können diffraktive und/oder refraktive optische Elemente eingesetzt werden, um die Schneidstrahlkontur des Laserstrahls zu erzeugen. Es kann auch vorgesehen sein, dass der Laserstrahl aus einem optischen Faserkern austritt, welcher die Form der Schneidstrahlkontur aufweist.

Der Laserstrahl kann wenigstens eine zu der Schneidfront korrespondierende weitere Schneidstrahlkontur aufweisen, die um eine Strahlachse des Laserstrahls gedreht angeordnet ist. Die weitere Schneidstrahlkontur ermöglicht es, die Schnittrichtung so zu ändern, dass die weitere Schneidstrahlkontur in der neuen Schnittrichtung vorne liegt. Der Laserstrahl bzw. eine Strahlformungseinheit, welche dem Laserstrahl die zu der Schneidfreund korrespondierende Schneidstrahlkontur verleiht, brauchen dann für eine entsprechende Änderung der Schnittrichtung nicht gedreht zu werden.

Der Laserstrahl ist vorzugsweise drehsymmetrisch bezüglich Drehungen um vorbestimmte Drehwinkel um seine Strahlachse, insbesondere bezüglich Drehungen um Vielfache von 90°. Wenn der Laserstrahl beispielsweise eine vierzählige Drehsymmetrie aufweist, besitzt der Laserstrahl eine (erste) Schneidstrahlkontur und drei weitere Schneidstrahlkonturen. Es können dann Rechtecke ausgeschnitten werden, ohne den Laserstrahl bzw. eine Strahlformungseinrichtung zu drehen. Zum Schneiden beliebig geformter Teile muss ein vierzählig drehsymmetrischer Laserstrahl nur um maximal 45°gedreht werden. Ein zweizählig drehsymmetrischer Laserstrahl (Drehsymmetrie bezüglich einer Drehung um 180°) mit zwei einander gegenüberliegenden Schnittkonturen muss zum Schneiden beliebig geformter Teile nur um maximal 90° gedreht werden. Die Symmetrie bezieht sich insbesondere auf denjenigen Querschnitt des Laserstrahls, der in Eingriff mit dem Werkstück ist.

Vorteilhafterweise ist der Laserstrahl spiegelsymmetrisch, insbesondere bezüglich einer zur Schnittrichtung parallelen Ebene. Die Schneidfront grenzt dann an ihren beiden lateralen Enden unter demselben Winkel an die Schnittflanken des Schnittspalts. Bei der Fertigungsplanung muss dann nicht darauf geachtet werden, auf welcher Seite der Schnittrichtung ein Gutteil anzuordnen ist. Beide Schnittflanken können mit der gleichen Qualität hergestellt werden.

Alternativ kann vorgesehen sein, dass der Laserstrahl nicht spiegelsymmetrisch ist. Insbesondere kann nur am Übergang der Schneidfront zu einer der Schnittflanken ein Winkel ausgebildet sein. Dies kann die Bereitstellung des Laserstrahls mit der korrespondierenden Schneidstrahlkontur vereinfachen. Die Schnittrichtung ist dann so zu wählen, dass ein Gutteil auf derjenigen Seite mit dem abgewinkelten Übergang zwischen der Schnittflanke und der Schneidfront angeordnet ist.

Besonders bevorzugt ist die Schneidfront bei Blick in Schnittrichtung konvex. Mit anderen Worten liegt ein Schneidfrontscheitel in Schnittrichtung hinter dem abgewinkelten Übergang der Schneidfront zur Schnittflanke. Der Schneidfrontscheitel ist gleichsam ins Innere des Schnittspalts gerichtet. Die Schneidfront muss dabei nicht kreisbogenförmig geformt sein. Die Schneidfront kann beispielsweise einen dreieckigen oder W-Förmigen Verlauf aufweisen, wobei ein oder mehrere spitz verlaufende, ins Innere des Schnittspalts gerichtete Schneidfronscheitel ausgebildet werden. Bei dieser Verfahrensvariante ist es besonders vorteilhaft, dass die Schmelze, die durch Verdampfungseffekte zur Seite gedrängt wird, auch zur Schneidfrontmitte fließt, um dort ausgetrieben zu werden. Sofern sich in der Mitte der Schneidfront ein Grat bildet, wird dieser beim weiteren Schneidprozess sicher überschnitten und damit vom Werkstück entfernt.

Der verbesserte Schmelzeaustrieb kann durch die Wahl weiterer Prozessparameter unterstützt werden. Ein hoher Schneidgasdruck treibt die Schmelze schneller und damit näher an der Schneidfront aus. Ein höherer Druck des Schneidgases ist aber auch mit höheren Gaskosten verbunden, so dass hier ein Optimum gefunden werden muss. Außerdem ist ein geringer Abstand zwischen einer Düse für das Schneidgas und der Werkstückoberfläche hilfreich, da auch dies die Schneidgaseinkopplung in den Schnittspalt verbessert.

### Erfindungsgemäße Laserschneidanlage

In den Rahmen der vorliegenden Erfindung ist eine Laserschneidanlage entsprechend Anspruch 10 definiert.

Die Laserschneidanlage ist zur Durchführung eines oben beschriebenen erfindungsgemäßen Verfahrens

Die Laserschneidanlage weist eine Laserlichtquelle auf. Die Laserlichtquelle sendet im Betrieb der Laserschneidanlage einen Laserstrahl aus. Die Laserschneidanlage weist ferner einen Bearbeitungskopf mit einer Düse auf. Der Bearbeitungskopf ermöglicht, es den Laserstrahl in einer Schnittrichtung über ein Werkstück zu führen und ferner ein Schneidgas als einen Gasstrahl auf das Werkstück zu richten, um den Austrieb von durch den Laserstrahl aufgeschmolzenem Material zur Ausbildung eines Schnittspalts zu unterstützen. Hierzu können der Bearbeitungskopf und das Werkstück relativ zueinander bewegt werden. Das Werkstück kann an einer Werkstückauflage der Laserschneidanlage gehalten sein.

Erfindungsgemäß weist die Laserschneidanlage eine Strahlformungseinrichtung auf, die dem Laserstrahl eine in Schnittrichtung vorne liegende, durchgängige Schneidstrahlkontur verleiht, wobei die Schneidstrahlkontur an einem quer zur Schnittrichtung äußersten Punkt des Laserstrahls unter einem Konturwinkel an eine Passivkontur des Laserstrahls angrenzt. Der solchermaßen geformte Laserstrahl ermöglicht es, beim Schneiden des Werkstücks den beschriebenen Übergang einer Schneidfront zu einer Schnittflanke unter einem Winkel einzurichten. Die Schneidstrahlkontur des Laserstrahls bewirkt dabei das Aufschmelzen des Materials des Werkstücks an der korrespondierenden Schneidfront. Die Passivkontur kann abschnittsweise parallel zu der Schnittflanke verlaufen. Typischerweise verläuft die Passivkontur bereits unmittelbar hinter dem lateralen äußersten Punkt zur Schnittspaltmitte hin. Im Bereich der Passivkontur kann die Schmelze weiter erwärmt werden bzw. deren Abkühlen verhindert werden. Dies erleichtert den Austrieb der Schmelze. Die Passivkontur kann die Gefahr des Anhaftens von Schmelze an der Schnittflanke weiter verringern.

Die Laserlichtquelle kann einen Festkörperlaser aufweisen. Die Laserlichtquelle kann Laserlicht mit einer Wellenlänge von wenigstens 0,2 µm, vorzugsweise wenigstens 0,4 µm und/oder von höchstens 6 µm, vorzugsweise höchstens 4 µm emittieren.

Die Laserschneidanlage kann eine Dreheinrichtung aufweisen, um die Strahlformungseinrichtung relativ zu einem Maschinenbett und/oder einer Werkstückauflage der Laserschneidanlage zu drehen. Die Drehung erfolgt vorzugsweise um eine Strahlachse des Laserstrahls. Die Dreheinrichtung ermöglicht es, die Schnittrichtung zu verändern.

Die Strahlformungseinrichtung kann diffraktive und/oder refraktive optische Elemente aufweisen. Durch eine geeignete Gestaltung bzw. Kombination dieser optischen Elemente kann der Laserstrahl mit der beschriebenen Schneidstrahlkontur erzeugt werden.

Zusätzlich kann die Strahlformungseinrichtung eine Scaneinrichtung aufweisen, um den Laserstrahl entlang der Schneidstrahlkontur hin und her zu bewegen. Dies ermöglicht es, gegebenenfalls erforderliche optische Elemente einfacher auszuführen. Das Formen der Schneidstrahlkontur durch Hin- und Herbewegen des Laserstrahls mittels der Scaneinrichtung eignet sich insbesondere für größere Breiten des Schnittspalts und größere Werkstückdicken.

Die Strahlformungseinrichtung kann einen optischen Faserkern aufweisen, dessen Außenkontur korrespondierend zu der Schneidstrahlkontur und der Passivkontur des Laserstrahls ausgebildet ist. Zum Fokussieren des Laserstrahls auf das Werkstück können zusätzliche diffraktive und/oder refraktive optische Elemente vorgesehen sein. Der optische Faserkern ist typischerweise Bestandteil einer optischen Faser. Die Strahlformung mittels des optischen Faserkerns kann den Aufbau der Laserschneidanlage vereinfachen.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: ein Werkstück während der Bearbeitung mit einem erfindungsgemäßen Laserschneidverfahren, wobei eine Schneidfront mit zwei ebenen Abschnitten ausgebildet ist, die gegenüber Schnittflanken, welche einen Schnittspalt begrenzen, abgewinkelt sind, in einer schematischen Aufsicht;
- Fig. 1b: das Werkstück von Figur 1a in einer schematischen Perspektivansicht, wobei das Werkstück geschnittenen dargestellt ist;
- Fig. 2a: einen schematischen Querschnitt eines ersten Laserstrahls mit einer Schneidstrahlkontur, welche zu der Schneidfront des Werkstücks von Figur 1a korrespondiert;
- Fig. 2b: einen schematischen Querschnitt eines zweiten Laserstrahls mit einer Schneidstrahlkontur, welche zu der Schneidfront des Werkstücks von Figur 1a korrespondiert;
- Fig. 2c: einen schematischen Querschnitt eines dritten Laserstrahls mit einer Schneidstrahlkontur, welche zu der Schneidfront des Werkstücks von Figur 1a korrespondiert, wobei der Laserstrahl drehsymmetrisch bezüglich Drehungen um Vielfache von 90° ausgebildet ist;
- Fig. 3a: ein Werkstück während der Bearbeitung mit einem erfindungsgemäßen Laserschneidverfahren, wobei eine Schneidfront mit zwei ebenen Abschnitten ausgebildet ist, die gegenüber einen Schnittspalt begrenzenden Schnittflanken abgewinkelt sind, und wobei die Schneidfront mehrere Knickstellen aufweist, in einer schematischen Aufsicht;
- Fig. 3b: das Werkstück von Figur 3a in einer schematischen Perspektivansicht, wobei das Werkstück geschnittenen dargestellt ist;
- Fig. 4: ein Werkstück während der Bearbeitung mit einem erfindungsgemäßen Laserschneidverfahren, wobei eine Schneidfront mit mehreren ebenen Abschnitten ausgebildet ist, die gegenüber einen Schnittspalt begrenzenden Schnittflanken und gegeneinander abgewinkelt sind, in einer schematischen Aufsicht;
- Fig. 5a: einen schematischen Querschnitt eines ersten Laserstrahls mit einer Schneidstrahlkontur, welche zu der Schneidfront des Werkstücks von Figur 4 korrespondiert;
- Fig. 5b: einen schematischen Querschnitt eines zweiten Laserstrahls mit einer Schneidstrahlkontur, welche zu der Schneidfront des Werkstücks von Figur 4 korrespondiert;
- Fig. 6: ein Werkstück während der Bearbeitung mit einem erfindungsgemäßen Laserschneidverfahren, wobei eine Schneidfront in einen Schnittspalt hinein gebogen ausgebildet ist, in einer schematischen Aufsicht;
- Fig. 7a: einen schematischen Querschnitt eines ersten Laserstrahls mit einer Schneidstrahlkontur, welche zu der Schneidfront des Werkstücks von Figur 6 korrespondiert, wobei der Laserstrahl drehsymmetrisch bezüglich Drehungen um Vielfache von 90° ausgebildet ist;
- Fig. 7b: einen schematischen Querschnitt eines zweiten Laserstrahls mit einer Schneidstrahlkontur, welche zu der Schneidfront des Werkstücks von Figur 6 korrespondiert;
- Fig. 7c: einen schematischen Querschnitt eines dritten Laserstrahls mit einer Schneidstrahlkontur, welche zu der Schneidfront des Werkstücks von Figur 6 korrespondiert;
- Fig. 8: ein Werkstück während der Bearbeitung mit einem erfindungsgemäßen Laserschneidverfahren, wobei eine Schneidfront mit zwei ebenen Abschnitten ausgebildet ist, die gegenüber einen Schnittspalt begrenzenden Schnittflanken abgewinkelt sind, und wobei ein Schneidfrontscheitel entgegen der Schnittrichtung in den Schnittspalt hineinragt, in einer schematischen Aufsicht;
- Fig. 9: einen schematischen Querschnitt eines Laserstrahls mit einer Schneidstrahlkontur, welche zu der Schneidfront des Werkstücks von Figur 8 korrespondiert;
- Fig. 10a: ein Werkstück während des Laserschneidens mit einem runden Laserstrahl in einem Laserschneidverfahren nach dem Stand der Technik, in einer schematischen Perspektivansicht, wobei das Werkstück geschnittenen dargestellt ist;
- Fig. 10b: das Werkstück von Figur 10a in einer schematischen Aufsicht;
- Fig. 11: eine erfindungsgemäße Laserschneidanlage in einer schematischen Seitenansicht.

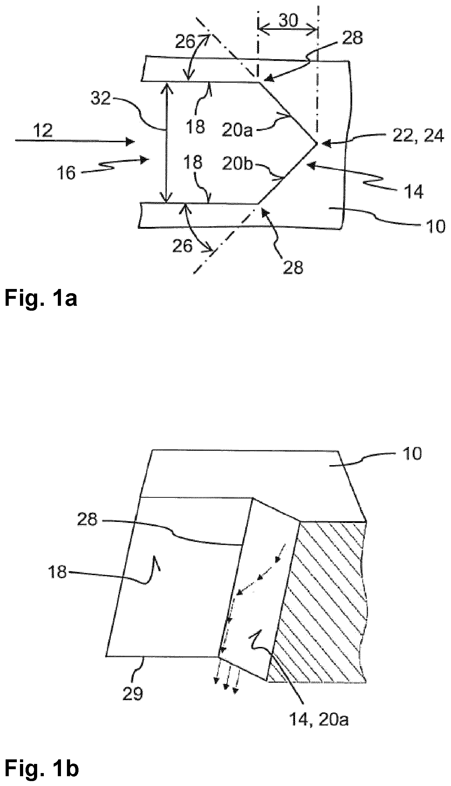

Die **Figuren 1a** und **1b** zeigen ein Werkstück **10** während eines Laserschneidvorgangs. Beim Laserschneiden wird ein Laserstrahl in einer Schnittrichtung **12** über das Werkstück 10 geführt. Dabei wird Material des Werkstücks 10 aufgeschmolzen. Die Schmelze grenzt an einer Schneidfront **14** an das noch nicht aufgeschmolzene, feste Material des Werkstücks 10 an. Das geschmolzene Material wird, typischerweise mit Unterstützung eines Gasstrahls, von dem Werkstück 10 entfernt, sodass ein Schnittspalt **16** entsteht. Der Schnittpalt 16 ist seitlich (quer zur Schnittrichtung 12) durch zwei Schnittflanken **18** begrenzt.

Die Schneidfront 14 ist hier mit zwei ebenen Abschnitten **20a, 20b** ausgebildet. Die Abschnitte 20a, 20b der Schneidfront 14 grenzen in einem Schneidfrontscheitel **22** aneinander. Der Schneidfrontscheitel 22 entspricht hier dem in Schnittrichtung 12 am weitesten vorne liegenden Bereich der Schneidfront 14. An dem Schnittfrontscheitel 22 ist hier eine Knickstelle **24** zwischen den Abschnitten 20a, 20b der Schneidfront 14 ausgebildet. Die Schneidfront 14 ist von oben betrachtet V-förmig ausgebildet.

Die Schneidfront 14 grenzt jeweils unter einem Winkel **26** an die beiden Schnittflanken 18 des Schnittspalts 16. Mit anderen Worten sind Übergänge **28** zwischen der Schneidfront 14 und den Schnittflanken 18 nicht glatt ausgebildet. Der Winkel 26 beträgt hier beispielhaft 45°. Hier sind die beiden Winkel 26 gleich groß. Im Allgemeinen können die Winkel 26 der Schneidfront 14 zu den beiden Schnittflanken 18 unterschiedlich groß sein. Die Schmelze wird durch die Winkel 26 an den Übergängen 28 am seitlichen Abströmen gehindert und fließt in der gebildeten Rinne nach unten ab (vergleiche Strömungspfeile in Figur 1b). Auf diese Weise wird ein Schmelzeaustrieb nahe an der Schneidfront 14 und insbesondere im Bereich des Schneidfrontscheitels 22, erzwungen. Ein Erstarren von Schmelze an den Schnittflanken 18 und insbesondere an deren unteren Schnittkanten **29** kann dadurch vermieden werden.

Ein in Schnittrichtung 12 gemessener Abstand **30** des Schneidfrontscheitels 22 von den abgewinkelten Übergängen 28 der Schneidfront 14 zu den Schnittflanken 18 kann ca. 60 % der Schnittspaltbreite **32** betragen.

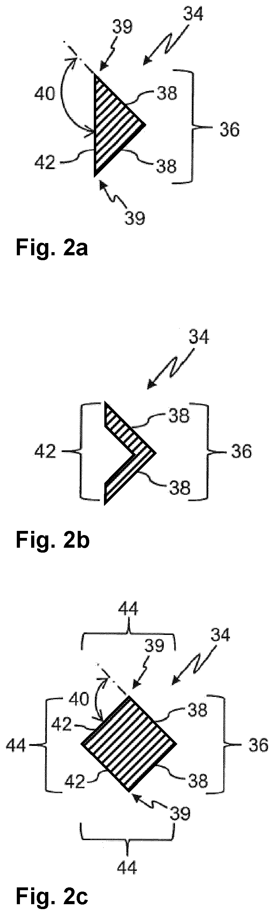

In den **Figuren 2a, 2b** und **2c** sind Querschnitte von Laserstrahlen **34** gezeigt, die beim Laserschneiden des Werkstücks 10 gemäß den Figuren 1a und 1b eingesetzt werden können. Die Laserstrahlen 34 weisen jeweils eine zu der Schneidfront 14 korrespondierende Schneidstrahlkontur **36** auf. Dass die Schneidstrahlkontur 36 und die Schneidfront 14 zueinander korrespondieren, bedeutet, dass sie einander in ihrer Form entsprechen. Typischerweise ist die Schneidstrahlkontur 36 geringfügig kleiner, insbesondere quer zur Schnittrichtung 12 schmaler, als die Schneidfront 14. Die Schneidstrahlkontur 36 ist hier entsprechend mit zwei gegeneinander abgewinkelten, im Querschnitt geradlinigen Konturabschnitten **38** ausgebildet. An bezüglich der Schnittrichtung 12 lateral äußersten Punkten **39** grenzt die Schneidstrahlkontur 36 unter einem Konturwinkel **40** an eine Passivkontur **42** des Laserstrahls 34. Die Passivkontur 42 ist beim Laserschneiden nicht am Aufschmelzen des Materials des Werkstücks 10 an der Schneidfront 14 beteiligt. Im Bereich der Passivkontur 42 kann bereits aufgeschmolzenes Material des Werkstücks 10 weiter erwärmt bzw. am Abkühlen gehindert werden.

Die Laserstrahlen 34 der Figuren 2a, 2b und 2c sind jeweils spiegelsymmetrisch zu einer zur Schnittrichtung 12 parallelen Mittenebene.

Der Laserstrahl 34 von Figur 2c ist zudem drehsymmetrisch bezüglich Drehungen um Vielfache von 90° um seine Strahlachse (senkrecht zur Zeichenebene). Der Laserstrahl 34 von Figur 2c weist daher drei weitere Schneidstrahlkonturen **44** auf. Aufeinanderfolgende Schneidstrahlkonturen 36, 44 sind jeweils um 90° (um die zu der Zeichenebene senkrechte Strahlachse des Laserstrahls 34) gegeneinander gedreht.

Der Querschnitt von Figur 2b kann beispielsweise durch Hin- und Herbewegen (Scannen) des Laserstrahls 34 entlang der Schneidstrahlkontur 36 erhalten werden. Die Querschnitte von Figur 2a und Figur 2c können beispielsweise durch eine Kombination diffraktiver und refraktiver optischer Elemente bzw. einen entsprechend geformten Faserkern einer optischen Faser erhalten werden.

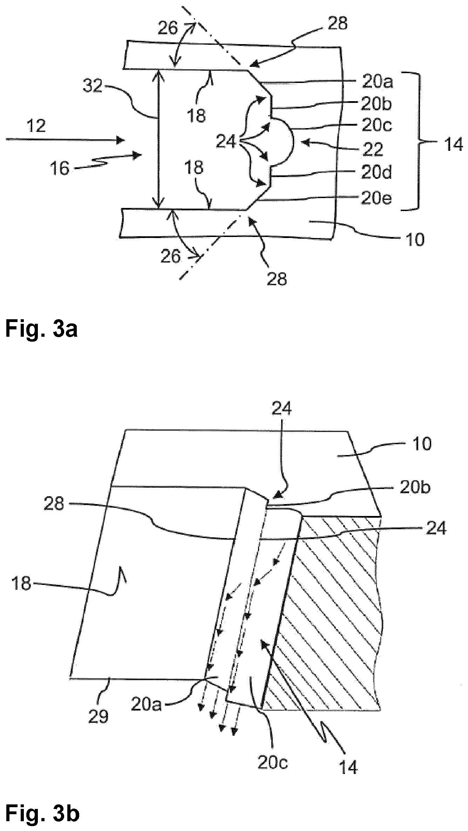

Die **Figuren 3a** und **3b** zeigen ein Werkstück 10 während eines Laserschneidvorgangs, wobei eine Schneidfront 14 mehrere an Knickstellen 24 gegeneinander abgewinkelte Abschnitte 20a - **20e** aufweist. Die Knickstellen 24 verringern die Menge an Schmelze, die zu einem abgewinkelten Übergang 28 der Schneidfront 14 zu Schnittflanken 18 eines Schnittspalt 16 gelangt (vergleiche Strömungspfeile in Figur 3b).

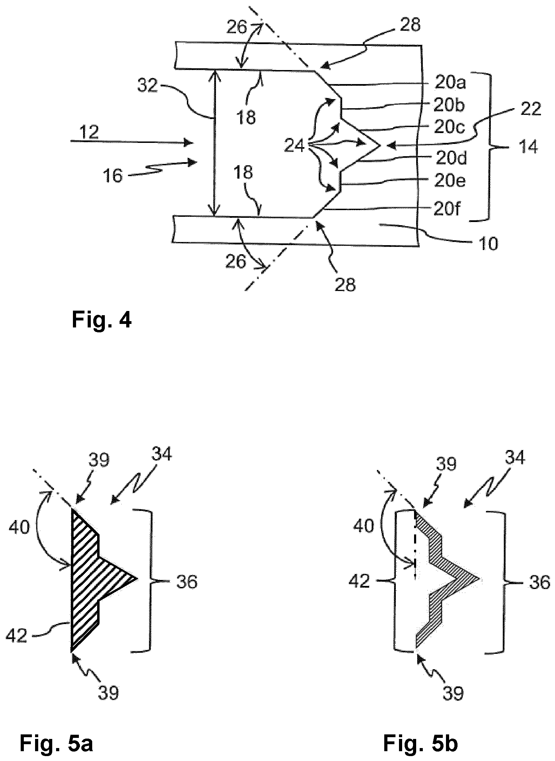

**Figur 4** zeigt ein Werkstück 10 beim Laserschneiden, wobei eine Schneidfront 14 ähnlich wie bei dem Werkstück von Figur 3a, jedoch mit sechs ebenen Abschnitten 20a - **20f,** ausgebildet ist. In den **Figuren 5a** und **5b** sind Querschnitte von Laserstrahlen 34 gezeigt, die eine zu der Schneidfront 14 des Werkstücks 10 von Figur 4 korrespondierende Schneidstrahlkontur 36 aufweisen.

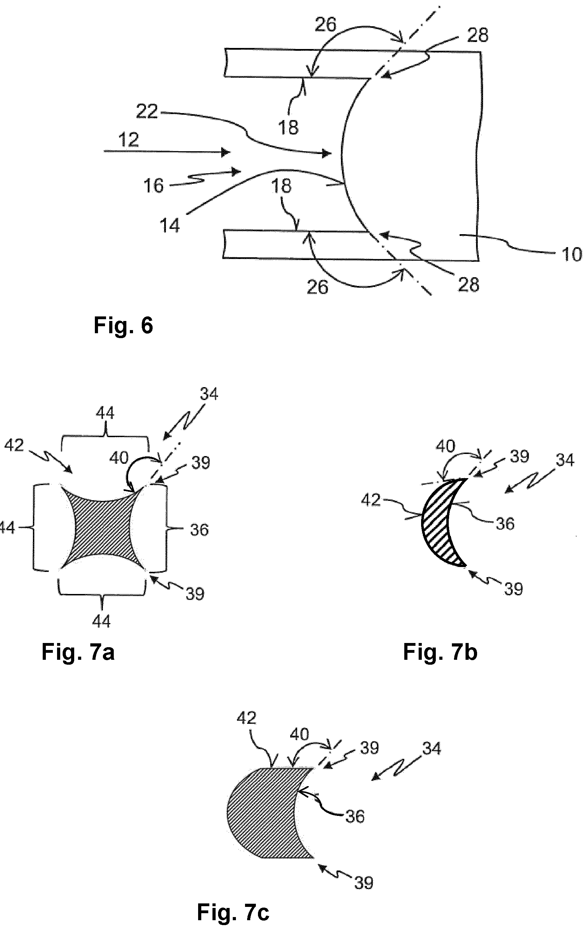

**Figur 6** zeigt ein Werkstück 10 beim Laserschneiden, wobei eine Schneidfront 14 gekrümmt ausgebildet ist. Ein Schneidfrontscheitel 22 bildet hier den in Schnittrichtung hintersten Punkt der Schneidfront 14. Bei Blick in Schnittrichtung 12 auf die Schneidfront 14 erscheint diese konvex.

In den **Figuren 7a, 7b** und **7c** sind Querschnitte von Laserstrahlen 34 gezeigt, die beim Laserschneiden des Werkstücks 10 von Figur 6 eingesetzt werden können. Die Laserstrahlen 34 weisen jeweils eine zu der Schneidfront 14 korrespondierende Schneidstrahlkontur 36 auf.

Die Laserstrahlen 34 der Figuren 7a, 7b und 7c sind jeweils spiegelsymmetrisch zu einer zur Schnittrichtung 12 parallelen Mittenebene.

Der Laserstrahl 34 von Figur 7a ist zudem drehsymmetrisch bezüglich Drehungen um Vielfache von 90° um seine Strahlachse. Der Laserstrahl 34 von Figur 7a weist daher drei weitere Schneidstrahlkonturen **44** auf. Aufeinanderfolgende Schneidstrahlkonturen 36, 44 sind jeweils um 90° (um eine zu der Zeichenebene senkrechte Strahlachse des Laserstrahls 34) gegeneinander gedreht.

Eine Passivkontur 42 des Laserstrahls 34 von Figur 7c erstreckt sich abschnittsweise parallel zu den Schnittflanken 18 am Schnittspalt 16 des Werkstücks 10. Das Erstarren von Schmelze an den Schnittflanken 18 kann dadurch wirkungsvoll vermieden werden.

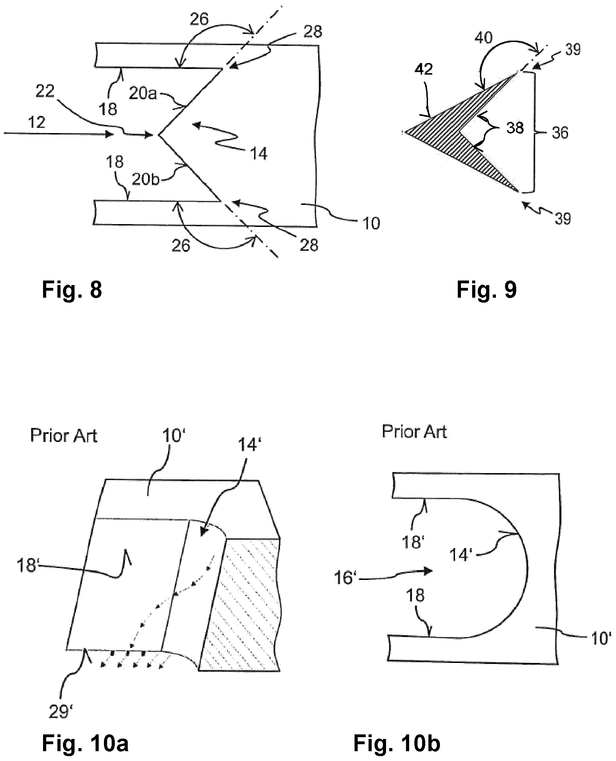

**Figur 8** zeigt ein Werkstück 10 beim Laserschneiden, wobei eine Schneidfront 14 wie bei dem Werkstück von Figur 6 in Schnittrichtung 12 gesehen konvex ausgebildet ist, wobei die Schneidfront 14 jedoch zwei gegeneinander abgewinkelte Abschnitte 20a, 20b aufweist.

In **Figur 9** ist ein Querschnitt eines Laserstrahls 34 gezeigt, der eine zu der Schneidfront 14 des Werkstücks 10 von Figur 8 korrespondierende Schneidstrahlkontur 36 aufweist. Ein Konturwinkel 40 beträgt hier ca. 160°. Dies ermöglicht es, einen abgewinkelten Übergang 28 zwischen der Schneidfront 14 und Schnittflanken 18 am Schnittspalt 16 des Werkstücks 10 besonders scharf auszubilden. Ein Winkel 26 zwischen den Schnittflanken 18 und der Schneidfront 14 kann beispielsweise 135° betragen.

Alternativ zu den in den Figuren 2a-c, 5a-b, 7a-c und 9 dargestellten Schneidstrahlkonturen 36 kann der Laserstrahl 34 auch eine sternförmige Schneidstrahlkontur (in den Figuren nicht dargestellt) aufweisen. Eine sternförmige Schneidstrahlkontur erzeugt eine zu der Sternform korrespondierende zackenförmige Schneidfront. Eine sternförmige Schneidstrahlkontur kann vorzugsweise mit 6, 9 oder gar mit 12 Zacken oder Strahlen ausgebildet sein. Bei zunehmender Anzahl der Zacken bzw. Strahlen kann das Erfordernis der Nachorientierung des Laserstrahls in Abhängigkeit von der Schneidrichtung eliminiert werden.

Die **Figuren 10a** und **10b** zeigen ein Werkstück 10' während des Laserschneidens mit einem im Querschnitt kreisrunden Laserstrahl. Bei einem solchen aus dem Stand der Technik bekannten Laserschneidverfahren geht eine Schneidfront 14' an der Material des Werkstücks 10' aufgeschmolzen wird, tangential (glatt) in eine Schnittflanke 18' eines Schnittspalts 16' über. Dadurch strömt in erheblichem Maße Schmelze auf die Schnittflanke 18' lagert sich auf dieser in Form von Riffeln sowie an deren unterer Schnittkante 29' in Form eines Grates ab (vergleiche die in Figur 10a eingezeichneten Strömungspfeile).

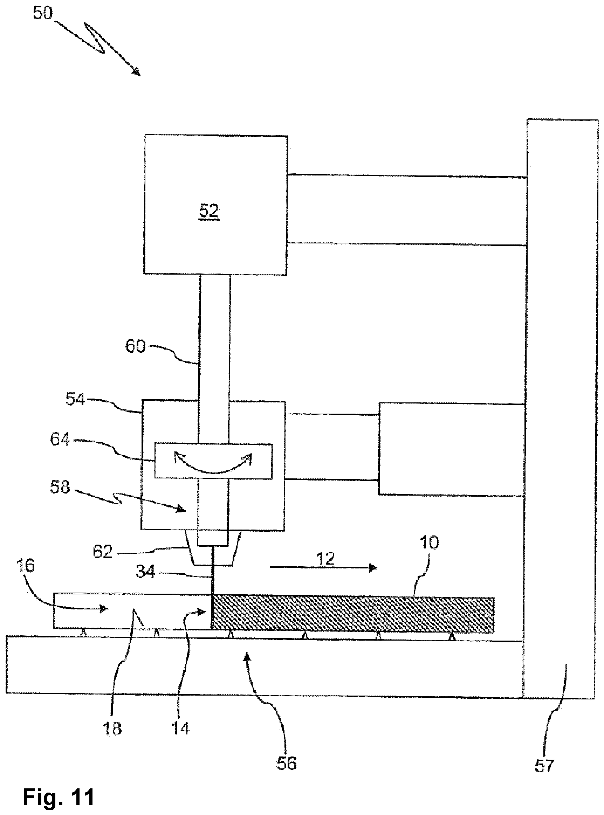

**Figur 11** zeigt eine Laserschneidanlage **50.** Die Laserschneidanlage 50 weist eine Laserlichtquelle **52,** hier mit einem Festkörperlaser, auf. Ein von der Laserlichtquelle 52 emittierter Laserstrahl 34 kann eine Wellenlänge von ca. 1 µm besitzen.

Die Laserschneidanlage 50 weist ferner einen Bearbeitungskopf **54** auf. Der Bearbeitungskopf 54 ermöglicht es, den Laserstrahl 34 in einer Schnittrichtung 12 über ein Werkstück 10 zu führen, sodass ein durch Schnittflanken 18 begrenzter Schnittspalt 16 entsteht, vergleiche auch Figuren 1a bis 9. Das Werkstück 10 kann an einer Werkstückauflage **56** der Laserschneidanlage 50 gehalten sein. Der Bearbeitungskopf 54 und die Werkstückauflage 56 sind relativ zueinander beweglich. Der Bearbeitungskopf 54 kann hierzu verschieblich an einem Maschinenbett **57** der Laserschneidanlage 50 geführt sein.

Die Laserschneidanlage 50 weist weiterhin eine Strahlformungseinrichtung **58** auf. Die Strahlformungseinrichtung 58 bewirkt, dass der Laserstrahl 34 mit einem zuvor beschriebenen Querschnitt (vergleiche beispielsweise Figuren 2a - 2c, 5a, 5b, 7a - 7c, 9) auf das Wegstück 10 trifft. Demgemäß geht an einem quer zur Schnittrichtung 12 äußersten Punkt 39 eine Schneidstrahlkontur 36 des Laserstrahls 34 unter einem Konturwinkel 40 in eine Passivkontur 42 über. Die Schneidstrahlkontur 36 schmilzt das Material des Werkstücks 10 an einer korrespondierenden Schneidfront 14 auf.

Die Strahlformungseinrichtung 58 kann eine optische Faser **60** mit einem nicht näher dargestellten Faserkern aufweisen. Über die optische Faser 60 kann der Laserstrahl 34 von der Laserlichtquelle 52 zu dem Bearbeitungskopf 54 geführt werden. Ein Querschnitt des Faserkerns kann dem Querschnitt des Laserstrahls 34 entsprechen.

Der Laserstrahl 34 wird durch eine Düse **62** austreten. Die Düse 62 dient dazu, Schneidgas als einen Gasstrahl auf das Werkstück 10 zu richten, um den Austrieb der Schmelze zu unterstützen.

Die Laserschneidanlage 50 weist zudem eine Dreheinrichtung **64** auf. Die Dreheinrichtung 64 ermöglicht es, den Laserstrahl 34 um seine Strahlachse zu drehen. Dadurch kann bei einer Änderung der Schnittrichtung 12 gegenüber dem Werkstück 10, etwa beim Schneiden entlang einer gekrümmten Linie, die Ausrichtung der Schneidstrahlkontur 36 in Schnittrichtung 12 vorne am Laserstrahl 34 beibehalten werden. Die Dreheinrichtung 64 kann hierzu die Strahlformungseinrichtung 58 gegenüber dem Maschinenbett 57 der Laserschneidanlage 50 drehen. Insbesondere kann die Dreheinrichtung 64 die Strahlformungseinrichtung 58, hier konkret ein freies Ende der optischen Faser 60 gegenüber dem Bearbeitungskopf 54 drehen.

### Bezugszeichenliste

Werkstück **10**
Schnittrichtung **12**
Schneidfront **14**
Schnittspalt **16**
Schnittflanken **18**
Abschnitte **20a** - **20f** der Schneidfront 14
Schneidfrontscheitel **22**
Knickstelle **24**
Winkel **26**
Übergänge **28**
Schnittkante **29**
Abstand **30**
Schnittspaltbreite **32**
Laserstrahl **34**
Schneidstrahlkontur **36**
Konturabschnitt **38**
äußerster Punkt **39**
Konturwinkel **40**
Passivkontur **42**
weitere Schneidstrahlkontur **44**
Laserschneidanlage **50**
Laserlichtquelle **52**
Bearbeitungskopf **54**
Werkstückauflage **56**
Maschinenbett **57**
Strahlformungseinrichtung **58**
optische Faser **60**
Düse **62**
Dreheinrichtung **64**

## Patentansprüche

1. Verfahren zum Laserschneiden eines Werkstücks (10), wobei ein Laserstrahl (34) in einer Schnittrichtung (12) über das Werkstück (10) geführt wird, sodass ein Schnittspalt (16) mit zwei Schnittflanken (18) entsteht,
**dadurch gekennzeichnet, dass**:
an dem Werkstück (10) an einer sich zwischen den Schnittflanken (18) erstreckenden Schneidfront (14) Material aufgeschmolzen wird, wobei die Schneidfront (14) unter einem Winkel (26), der größer als Null ist, an zumindest eine der Schnittflanken (18), vorzugsweise an beide Schnittflanken (18), unter Ausbildung eines abgewinkelten Übergangs der Schneidfront auf die Schnittflanke, angrenzt, und, dass:
der Laserstrahl (34) einen nicht-kreisförmigen Querschnitt und in Schnittrichtung (12) vorne eine durchgängige, zu der Schneidfront (14) korrespondierende Schneidstrahlkontur (36) aufweist.

2. Verfahren nach Anspruch 1, **dadurch gekennzeichnet, dass** ein Abstand (30) eines Schneidfrontscheitels von dem Übergang der Schneidfront (14) zur Schnittflanke (18) in Schnittrichtung wenigstens halb so groß ist wie eine Schnittspaltbreite und/oder höchstens so groß ist wie die Schnittspaltbreite.

3. Verfahren nach einem der vorhergehenden Ansprüche, **dadurch gekennzeichnet, dass** der Winkel (26) zwischen der Schneidfront (14) und der Schnittflanke (18) wenigstens 30°, bevorzugt wenigstens 60°, besonders bevorzugt wenigstens 90°, ganz besonders bevorzugt wenigstens 120°, beträgt.

4. Verfahren nach einem der vorhergehenden Ansprüche, **dadurch gekennzeichnet, dass** innerhalb der Schneidfront (14) wenigstens eine Knickstelle (24) ausgebildet ist, an der benachbarte Abschnitte (20a - 20e) der Schneidfront (14) gegeneinander abgewinkelt sind.

5. Verfahren nach einem der vorhergehenden Ansprüche, **dadurch gekennzeichnet, dass** die Schneidstrahlkontur (36) durch Hin- und Herbewegen des Laserstrahls (34) erzeugt wird.

6. Verfahren nach einem der vorhergehenden Ansprüche, **dadurch gekennzeichnet, dass** der Laserstrahl (34) wenigstens eine zu der Schneidfront (14) korrespondierende weitere Schneidstrahlkontur (44) aufweist, die um eine Strahlachse des Laserstrahls (34) gedreht angeordnet ist.

7. Verfahren nach einem der vorhergehenden Ansprüche, **dadurch gekennzeichnet, dass** der Laserstrahl (34) drehsymmetrisch ist bezüglich Drehungen um vorbestimmte Drehwinkel um seine Strahlachse, insbesondere bezüglich Drehungen um Vielfache von 90°.

8. Verfahren nach einem der vorhergehenden Ansprüche, **dadurch gekennzeichnet, dass** der Laserstrahl (34) spiegelsymmetrisch ist, insbesondere bezüglich einer zur Schnittrichtung (12) parallelen Ebene.

9. Verfahren nach einem der vorhergehenden Ansprüche, **dadurch gekennzeichnet, dass** die Schneidfront (14) bei Blick in Schnittrichtung (12) konvex ist.

10. Laserschneidanlage (50) aufweisend
- eine Laserlichtquelle (52),
die Laserschneidanlage **gekennzeichnet durch** das Folgende:
- eine Schneidgasquelle;
- einen Bearbeitungskopf (54) mit einer Düse (62), um einen Laserstrahl (34) in einer Schnittrichtung (12) über ein Werkstück (10) zu führen und um ein Schneidgas als einen Gasstrahl auf das Werkstück (10) zur richten, um den Austrieb von durch den Laserstrahl (34) aufgeschmolzenem Material zur Ausbildung eines Schnittspalts (16) zu unterstützen,
- eine Strahlformungseinrichtung (58), die dem Laserstrahl (34) eine in Schnittrichtung (12) vorne liegende, durchgängige Schneidstrahlkontur (36) verleiht, wobei die Schneidstrahlkontur (36) an einem quer zur Schnittrichtung (12) äußersten Punkt (39) des Laserstrahls (34) unter einem Konturwinkel (40), der größer als Null ist, (40) an eine Passivkontur (42) des Laserstrahls (34) unter Ausbildung eines abgewinkelten Übergang der Schneidfront auf die Schnittkante angrenzt,
wobei die Laserschneidanlage zur Durchführung eines Verfahrens nach einem der vorhergehenden Ansprüche eingerichtet ist.

11. Laserschneidanlage (50) nach Anspruch 10, **dadurch gekennzeichnet, dass** die Laserlichtquelle (52) einen Festkörperlaser aufweist.

12. Laserschneidanlage (50) nach Anspruch 10 oder 11, **dadurch gekennzeichnet, dass** eine Dreheinrichtung (64) vorgesehen ist, um die Strahlformungseinrichtung (58) relativ zu einem Maschinenbett (57) und/oder einer Werkstückauflage (56) der Laserschneidanlage (50) zu drehen.

13. Laserschneidanlage (50) nach einem der Ansprüche 10 bis 12, **dadurch gekennzeichnet, dass** die Strahlformungseinrichtung diffraktive und/oder refraktive optische Elemente aufweist.

14. Laserschneidanlage (50) nach einem der Ansprüche 10 bis 13, **dadurch gekennzeichnet, dass** die Strahlformungseinrichtung eine Scaneinrichtung aufweist, um den Laserstrahl (34) entlang der Schneidstrahlkontur (36) hin und her zu bewegen.

15. Laserschneidanlage (50) nach einem der Ansprüche 10 bis 13, **dadurch gekennzeichnet, dass** die Strahlformungseinrichtung (58) einen optischen Faserkern aufweist, dessen Außenkontur korrespondierend zu der Schneidstrahlkontur (36) und der Passivkontur des Laserstrahls (34) ausgebildet ist.

## Claims

1. A method for laser cutting a workpiece (10),
wherein a laser beam (34) is guided over the workpiece (10) in a cutting direction (12) so that a cutting kerf (16) is created, the kerf having two cutting flanks (18),
**characterized in that**:
material is melted on the workpiece (10) on a cutting front (14) that extends between the cutting flanks (18), wherein the cutting front (14) adjoins at least one of the cutting flanks (18), preferably both of the cutting flanks (18), at an angle (26) that is greater than zero, thereby forming an angled transition from the cutting front to the cutting flank,
and **in that**:
the laser beam (34) has a non-circular cross section and a continuous cutting beam contour (36) at the front that corresponds to the cutting front (14) in the cutting direction (12).

2. The method according to claim 1, **characterized in that** the distance (30) of a cutting front vertex from the transition of the cutting front (14) to the cutting flank (18) in the cutting direction is at least half as much as a cutting kerf width and/or at most the same as the cutting kerf width.

3. The method according to one of the preceding claims, **characterized in that** the angle (26) between the cutting front (14) and the cutting flank (18) is at least 30°, preferably at least 60°, more preferably at least 90°, much more preferably at least 120°.

4. The method according to one of the preceding claims, **characterized in that** at least one kink point (24) is formed within the cutting front (14) at which the adjoining sections (20a - 20e) of the cutting front (14) are angled with respect to one another.

5. The method according to one of the preceding claims, **characterized in that** the cutting beam contour (36) is produced by moving the laser beam (34) back and forth.

6. The method according to one of the preceding claims, **characterized in that** the laser beam (34) has at least one further cutting beam contour (44) that corresponds to the cutting front (14), said further cutting beam contour being arranged rotated about a beam axis of the laser beam (34).

7. The method according to one of the preceding claims, **characterized in that** the laser beam (34) is rotationally symmetrical with respect to rotations by predetermined rotation angles about its beam axis, in particular with respect to rotations by multiples of 90°.

8. The method according to one of the preceding claims, **characterized in that** the laser beam (34) is mirror-symmetrical, in particular with respect to a plane that is parallel to the cutting direction (12).

9. The method according to one of the preceding claims, **characterized in that** the cutting front (14) is convex when viewed in the cutting direction (12).

10. A laser cutting apparatus (50), comprising
- a laser light source (52), the laser cutting apparatus being **characterized by** the following:
- a cutting gas source;
- a processing head (54) having a nozzle (62) for guiding a laser beam (34) in a cutting direction (12) over a workpiece (10) and for directing a cutting gas onto the workpiece (10) as a gas stream in order to support the forcing out of material melted by the laser beam (34) so as to form a cutting kerf (16),
- a beam shaping device (58) which gives the laser beam (34) a continuous cutting beam contour (36) that lies in front in the cutting direction (12), wherein the cutting beam contour (36) adjoins a laterally outermost point (39) of the laser beam (34) relative to the cutting direction (12), at a contour angle (40) that is greater than zero, (40) on a passive contour (42) of the laser beam (34), thereby forming an angled transition of the cutting front to the cutting edge,
wherein the laser cutting apparatus is configured to carry out a method according to one of the preceding claims.

11. The laser cutting apparatus (50) according to claim 10, **characterized in that** the laser light source (52) comprises a solid-state laser.

12. The laser cutting apparatus (50) according to claim 10 or 11, **characterized in that** a rotating device (64) is provided for rotating the beam shaping device (58) relative to a machine bed (57) and/or relative to a workpiece support (56) of the laser cutting apparatus (50).

13. The laser cutting apparatus (50) according to claims 10 to 12, **characterized in that** the beam shaping device has diffractive and/or refractive optical elements.

14. The laser cutting apparatus (50) according to one of claims 10 to 13, **characterized in that** the beam shaping device has a scanning device for moving the laser beam (34) back and forth along the cutting beam contour (36).

15. The laser cutting apparatus (50) according to one of claims 10 to 13, **characterized in that** the beam shaping device (58) has an optical fiber core, the outer contour of which is designed to correspond to the cutting beam contour (36) and the passive contour of the laser beam (34).

## Revendications

1. Procédé de découpe laser d'une pièce (10),
dans lequel un faisceau laser (34) est guidé sur la pièce (10) dans une direction de coupe (12), de manière à réaliser une rainure de coupe (16) avec deux flancs de coupe (18),
**caractérisé en ce que** :
le matériau est fondu sur la pièce (10) sur un front de coupe (14) qui s'étend entre les flancs de coupe (18), dans lequel le front de coupe (14) est contigu à au moins l'un des flancs de coupe (18) selon un angle (26) supérieur à zéro, et est de préférence contigu aux deux flancs de coupe (18), formant une transition inclinée entre le front de coupe et le flanc de coupe,
et **en ce que** :
le faisceau laser (34) présente une section transversale non circulaire et, en avant dans la direction de coupe (12), un contour de faisceau de coupe (36) continu qui correspond au front de coupe (14).

2. Procédé selon la revendication 1, **caractérisé en ce que** la distance (30) d'une crête du front de coupe depuis la transition du front de coupe (14) jusqu'au flanc de coupe (18) dans la direction de coupe est au moins moitié aussi grande que la largeur de la rainure de coupe et/ou au plus aussi grande que la largeur de la rainure de coupe.

3. Procédé selon l'une des revendications précédentes, **caractérisé en ce que** l'angle (26) entre le front de coupe (14) et le flanc de coupe (18) est d'au moins 30°, de préférence d'au moins 60°, de préférence encore d'au moins 90°, et de manière tout particulièrement préférée d'au moins 120°.

4. Procédé selon l'une des revendications précédentes, **caractérisé en ce qu'**au moins un coude (24) est formé dans le front de coupe (14), où des sections adjacentes (20a - 20e) du front de coupe (14) sont inclinées l'une vers l'autre.

5. Procédé selon l'une des revendications précédentes, **caractérisé en ce que** le contour du faisceau de coupe (36) est généré en déplaçant le faisceau laser (34) d'un côté à l'autre.

6. Procédé selon l'une des revendications précédentes, **caractérisé en ce que** le faisceau laser (34) présente au moins un autre contour de faisceau de coupe (44) correspondant au front de coupe (14), qui est pivoté autour d'un axe de faisceau du faisceau laser (34).

7. Procédé selon l'une des revendications précédentes, **caractérisé en ce que** le faisceau laser (34) présente une symétrie de rotation pour des rotations selon des angles de rotation prédéterminés autour de son axe de faisceau, en particulier pour des rotations par multiples de 90°.

8. Procédé selon l'une des revendications précédentes, **caractérisé en ce que** le faisceau laser (34) est symétrique en miroir, en particulier par rapport à un plan parallèle à la direction de coupe (12).

9. Procédé selon l'une des revendications précédentes, **caractérisé en ce que** le front de coupe (14) est convexe vu dans la direction de coupe (12).

10. Installation de découpe laser (50) comprenant
- une source de lumière laser (52), l'installation de découpe laser étant **caractérisée par** les éléments suivants :
- une source de gaz de coupe ;
- une tête de traitement (54) avec une buse (62) pour guider un faisceau laser (34) dans une direction de coupe (12) sur une pièce (10) et pour diriger un gaz de coupe sous forme d'un jet de gaz sur la pièce (10), de manière à favoriser l'expulsion de matière fondue par le faisceau laser (34) pour former une rainure de coupe (16),
- un dispositif de formation de faisceau (58), qui donne au faisceau laser (34) un contour de faisceau de coupe (36) continu à l'avant dans la direction de coupe (12), dans lequel le contour du faisceau de coupe (36) est contigu, en un point le plus externe (39) du faisceau laser (34) transversalement à la direction de coupe (12), à un contour passif (42) du faisceau laser (34) selon un angle de contour (40) supérieur à zéro, (40) en formant une transition inclinée entre le front de coupe et le bord de coupe,
dans lequel l'installation de découpe laser est configurée pour mettre en oeuvre un procédé selon l'une des revendications précédentes.

11. Installation de découpe laser (50) selon la revendication 10, **caractérisée en ce que** la source de lumière laser (52) comporte un laser à l'état solide.

12. Installation de découpe laser (50) selon la revendication 10 ou 11, **caractérisée en ce qu'**un dispositif de rotation (64) est pourvu pour faire tourner le dispositif de formation de faisceau (58) par rapport à un banc de machine (57) et/ou à un support de pièce (56) de l'installation de découpe laser (50).

13. Installation de découpe laser (50) selon l'une des revendications 10 à 12, **caractérisée en ce que** le dispositif de formation de faisceau comporte des éléments optiques diffractifs et/ou réfractifs.

14. Installation de découpe laser (50) selon l'une des revendications 10 à 13, **caractérisée en ce que** le dispositif de formation de faisceau présente un dispositif de balayage pour déplacer le faisceau laser (34) d'un côté à l'autre le long du contour du faisceau de coupe (36).

15. Installation de découpe laser (50) selon l'une des revendications 10 à 13, **caractérisée en ce que** le dispositif de formation de faisceau (58) comporte un noyau de fibre optique dont le contour externe est conçu pour correspondre au contour du faisceau de coupe (36) et au contour passif du faisceau laser (34).
